# EUROPÄISCHE PATENTSCHRIFT

(11) **EP 0 533 866 B1**
(45) Veröffentlichungstag und Bekanntmachung des Hinweises auf die Patenterteilung: **06.12.1995**
(21) Anmeldenummer: 92906504.3
(22) Anmeldetag: 13.03.1992
(51) Int. Cl.: C21B 13/00, C21B 13/14

(54) **VERFAHREN ZUM HERSTELLEN VON FLÜSSIGEM METALL AUS FEINKÖRNIGEN METALLOXIDPARTIKELN UND REDUKTIONS- UND SCHMELZOFEN ZUR DURCHFÜHRUNG DES VERFAHRENS**
PROCESS AND REDUCTION AND MELTING FURNACE FOR PRODUCING LIQUID METAL FROM FINE METAL OXIDE PARTICLES
PROCEDE POUR LA FABRICATION DE METAL LIQUIDE A PARTIR DE PARTICULES D'OXYDE METALLIQUE FINES ET FOUR A REDUCTION ET A FUSION POUR LA REALISATION DU PROCEDE

(30) Priorität: 14.03.1991 DE 4108283
(43) Veröffentlichungstag der Anmeldung: 31.03.1993
(73) Patentinhaber: MANNESMANN Aktiengesellschaft, 40213 Düsseldorf (DE)
(72) Erfinder: WEBER, Ralph, 22221-Rio de Janeiro, RJ (BR)
(74) Vertreter: Blumbach, Kramer & Partner
(86) Internationale Anmeldenummer: EP9200551
(87) Internationale Veröffentlichungsnummer: WO9216663

(56) Entgegenhaltungen:
- EP-A- 0 143 102
- DE-A- 3 735 966
- FR-A- 2 215 478

## Beschreibung

Die Erfindung betrifft ein Verfahren gemäß dem Oberbegriff des Patentanspruches 1 sowie einen Reduktions- und Schmelzofen gemäß dem Oberbegriff des Patentanspruches 13.

Ein Verfahren dieser Art ist durch die DE-A- 21 32 150 bekanntgeworden. Bei diesem Verfahren wird das in einem Vorreduktionszyklon vorreduzierte Feinerz in einem Fertigreduktionszyklon mittels der im wesentlichen aus Kohlenmonoxid bestehenden heißen Abgase eines Schmelz- und Frischaggregats fertigreduziert, und dann als fester Austrag dem Schmelz- und Frischaggregat zugeführt. In diesem wird der feste Austrag bei gleichzeitiger Erzeugung des Reduktionsgases durch unvollständige Verbrennung von Kohlenstoff im Überschuß eingeschmolzen und anschließend mittels Sauerstoff gefrischt.

Die Reduktionsgeschwindigkeit im Fertigreduktionszyklon hängt wesentlich von der Temperatur ab. Wegen des sogenannten "Sticking-Effektes", d.h. der Klebeneigung von feinkörnigem bis staubförmigem Eisenschwamm bei Temperaturen oberhalb 850°C können im Fertigreduktionszyklon jedoch nicht die optimalen Reduktionsbedingungen eingestellt werden, so daß die im Grunde ideale Prozeßführung - hohe Metallisierung des Feinerzes mittels Reduktionsgas bei einer Temperatur oberhalb 850°C und anschließendes Schmelzen - bisher technisch wirtschaftlich noch nicht beherrschbar ist.

Bei den sogenannten Schmelzreduktionsverfahren für Feinerz wird Feinerz im geschmolzenen Zustand reduziert. Zu diesem Zweck wird bei dem Verfahren nach der EP-B1-0 063 924 in den unteren Bereich eines eine Kokssäule enthaltenden Schmelz- und Reduzierofens hoch erhitzte Luft oder mit Sauerstoff angereicherte Luft eingeblasen, wodurch vor den Düsen Hochtemperaturzonen von 2000 bis 2500°C gebildet werden. Oberhalb der Einblasdüsen befinden sich weitere Düsen, durch die heißes vorreduziertes Feinerz mittels Heißluft oder Sauerstoff eingeblasen wird. Das vorreduzierte Feinerz wird hierbei zunächst oxidiert und durch die Reaktionshitze geschmolzen, um dann beim Absinken durch das Koksbett im Gegenstrom zu den heißen aufsteigenden Gasen aus der Hochtemperaturzone fertigreduziert und im Bodenbereich des Bodens in flüssigem Zustand gesammelt zu werden. Die Hitzezufuhr im unteren Bereich des Ofens muß ausreichend sein, um eine unzulässige Abkühlung des verflüssigten Eisenoxids beim Reduzieren während des Absinkens im Feststoffbett zu verhindern.

Die Vorreduktion des Feinerzes findet in einer gesonderten oder in einer in den Schmelz- und Reduktionsofen integrierten Vorreduktionsstufe statt, wobei als reduzierendes Gas das Abgas des Schmelzofens benutzt wird.

Der Erfindung liegt die Aufgabe zugrunde, den Wirkungsgrad bei einem Verfahren der einleitend genannten Art zu verbessern und eine Feststoffreduktion von Feinerz oberhalb von Temperaturen bei denen der "Sticking-Effekt" auftritt zu ermöglichen.

Es soll der Gesamtenergieverbrauch verringert und Überschußgas verringert oder vermieden werden.

Ferner soll ein Reduktions- und Schmelzofen für die Durchführung des Verfahrens geschaffen werden, der sich durch einen niedrigen Verbrauch an Feuerfestmaterial für die Ofenauskleidung auszeichnet.

Das erfindungsgemäße Verfahren ist durch die Merkmale des Anspruches 1 gekennzeichnet, die erfindungsgemäße Vorrichtung durch die Merkmale des Anspruches 13. Vorteilhafte Ausgestaltungen des erfindungsgemäßen Verfahrens und der erfindungsgemäßen Vorrichtung sind den übrigen Ansprüchen zu entnehmen.

Bei dem erfindungsgemäßen Verfahren werden die zusammen mit heißem Reduktionsgas in einen Endreduktionsraum geblasenen feinkörnigen bis staubförmigen Metalloxidpartikel auf einer erhitzten Schüttgutfilterschicht, durch die das mit den Partikeln beladene Gas hindurchgeleitet wird, festgehalten und durch das vorbeistreichende Reduktionsgas fertigreduziert. Hierbei wird der Sticking-Effekt bewußt in Kauf genommen, so daß mit einem Reduktionsgas oberhalb 850°C, vorzugsweise um 950°C gearbeitet werden kann, bei der die Reduktionsreaktion beschleunigt abläuft. Durch das sich auf dem Filter absetzende und anklebende Material, das hier zu Eisenschwamm reduziert wird, steigt der Druckverlust des Filters an. Es wird dann durch Blasen eines sauerstoffhaltigen Gases, vorzugsweise vermischt mit Kohlestaub, gegen die Filterschicht das angeklebte Material geschmolzen, welches im flüssigen Zustand durch die Filterschicht hindurchtritt und von einem unterhalb der Filterschicht liegenden Aufnahmeraum für flüssiges Metall aufgenommen wird. Bei diesem Vorgang wird die Filterschicht über die Liquidustemperatur des Metalls erhitzt und gleichzeitig gereinigt.

Vorzugsweise werden die Metalloxidpartikel vor dem Einblasen in den Endreduktionsraum in einem Vorreduktionsraum einer Vorreduktionsstufe durch reduzierende, heiße Gase in einer Wirbelschicht erhitzt und vorreduziert. Als reduzierendes Gas wird vorzugsweise wenigstens ein Teil des Abgases des Endreduktionsraums, das die Filterschicht durchströmt hat und/oder ein Teil des Abgases aus dem Aufnahmeraum für das flüssige Metall verwendet. Es genügt wenn die Metalloxidpartikel in der Vorreduktionsstufe bis zu einem Restsauerstoffgehalt von etwa 50% reduziert werden, wobei hier darauf zu achten ist, daß die Temperatur unterhalb der Grenze gehalten wird, bei der ein merklicher Sticking-Effekt auftritt. Vorzugsweise werden die Metalloxidpartikel in der Vorreduktionsstufe auf 750 bis 850°C erhitzt.

Um das flüssige Metall im Aufnahmeraum auf Abstichtemperatur zu bringen, ist es vorteilhaft, oberhalb des Metallbades sauerstoffhaltige Gase und Brennstoff, vorzugsweise staubförmige Kohle, einzublasen. Der Brennstoff kann auch durch ein oberhalb des Metallbads gebildetes Kohlefließbett gebildet werden, indem dem Aufnahmeraum im oberen Bereich Kohle zugeführt wird. Hierdurch wird auch zusätzliches, reduzierendes Gas gewonnen.

Es hat sich als vorteilhaft erwiesen, als Reduktionsgas, mit dem die Metalloxidpartikel in den Endreduktionsraum eingeblasen werden, ein in einem Reformer aufbereitetes Gas zu verwenden, wobei sich als Reformer insbesondere ein Aggregat eignet, wie es in der DE-A 40 28 853 beschrieben ist. Bei diesem sogenannten ENOR-Verfahren wird die Reformierung eines C0₂/H₂-haltigen Gases unter Zusatz eines Vergasungsmittels (Kohle oder Kohlenwasserstoff) in einem Reaktor durchgeführt, dem die Prozeßwärme durch Wärmeträger-Partikel zugeführt wird. Die Wärmeträger-Partikel werden innerhalb eines geschlossenen Kreislaufs in einem Erhitzer durch in einer Brennkammer entstehende Verbrennungsgase erwärmt. Der Brennkammer wird zu diesem Zweck ein Teil der Abgase des Endreduktionsraums, des Aufnahmeraums für das flüssige Metall oder des Vorreduktionszyklons zugeleitet und dort mit Luft verbrannt.

Die Schüttgutfilterschicht, welche vorzugsweise eine Dicke von 20 bis 50 cm aufweist, kann aus festen kohlenstoffhaltigen Materialen, wie Koks, oder feuerfesten Materialen, wie Keramikteilen, oder aus einem Gemisch von beiden, gebildet werden. Wesentlich ist eine Gasdurchlässigkeit und Hitzebeständigkeit der Filterschicht. Die Filterschicht kann auf oder zwischen Stützgittern gebildet werden und das aufgebrauchte Material der Filterschicht durch periodische oder kontinuierliche Zufuhr von frischem Material ersetzt werden.

Vorzugsweise wird der Endreduktionsraum sowohl in einem oberen, als auch in einem unteren Bereich durch eine Filterschicht begrenzt. Hierdurch wird einerseits die Ausmauerung des Reduktions- und Schmelzofens vor der unmittelbaren Einwirkung der Hochtemperaturflamme beim Schmelzen des Eisenschwamms geschützt, und es besteht andererseits eine einfache Möglichkeit das verbrauchte Material der Filterschicht im unteren Bereich durch Material aus der Filterschicht des oberen Bereiches zu ergänzen, der wiederum frisches Material von oben zugeführt wird. Bei einer Filterschicht das stückiges kohlenstoffhaltiges Material enthält, können der Filterschicht auch grobkörnige bzw. stückige Metalloxidpartikel zugesetzt werden, die im unteren Bereich, d.h. in dem Bereich, der der Hochtemperaturflamme ausgesetzt wird, reduziert und geschmolzen werden.

Das Blasen des sauerstoffhaltigen Gases gegen die Filterschicht kann sowohl im Gegenstrom als auch im Gleichstrom zu dem die Filterschicht durchdringenden flüssigen Metall erfolgen, d.h. die Hochtemperaturflamme kann von unten oder von oben gegen die Filterschicht geblasen werden. Vorzugsweise werden die Abgase der Hochtemperaturflamme in gleicher Richtung wie das verflüssigte Metall durch die Filterschicht geleitet, d.h. die Hochtemperaturflamme ist gegen die Oberseite der Filterschicht gerichtet und die Abgase durchströmen die Filterschicht in der gleichen Richtung wie das Reduktionsgas und das flüssige Metall. Hierbei kann das sauerstoffhaltige Gas entweder periodisch abwechselnd mit Reduktionsgas, das mit den Metalloxidpartikeln beladen ist, in den Endreduktionsraum eingeblasen werden, oder kontinuierlich.

Ein zur Durchführung des Verfahrens geeigneter Reduktions- und Schmelzofen umfaßt einen oberen Reduktionsraum und einen unteren Aufnahmeraum mit einer Trennwand, die teilweise durch eine von einem Stützgitter gehaltene Schüttgutfilterschicht aus stückiger Kohle, insbesondere Koks, und/oder Keramikteilen gebildet ist, und welche einen Gas- und Materialdurchlaß zwischen dem Endreduktionsraum und dem Aufnahmeraum darstellt.

Vorzugsweise ist die Trennwand zwischen den beiden Räumen nach unten konvergierend ausgebildet.

Gemäß einer weiteren Ausgestaltung der Erfindung schließt sich an die Trennwand zwischen den beiden Räumen nach oben eine weitere mantelförmige Trennwand an, die den Reduktionsraum seitlich gegenüber einem ringförmigen Gasraum abgrenzt, und ebenfalls wenigstens teilweise durch eine von einem Stützgitter gehaltene Schüttgutfilterschicht gebildet ist. Eine Chargieröffnung am oberen Rand der Trennwand ermöglicht ein Nachfüllen von Material für die Schüttgutfilterschicht sowohl des oberen wie auch des unteren Bereiches. Die Trennwand schirmt die feuerfeste Auskleidung des Ofengefäßes im Bereich des Endreduktionsraumes gegenüber der Hochtemperaturflamme ab.

Die Erfindung wird durch zwei Ausführungsbeispiele anhand von 3 Figuren näher erläutert.

Es zeigen jeweils in schematischer Darstellung:
- Fig. 1: ein Prozeßdiagramm für die Reduktionsphase bei einem zyklisch betriebenen Reduktions- und Schmelzprozeß,
- Fig. 2: die Schmelz- und Reinigungsphase dieses Prozesses
- Fig. 3: einen kontinuierlichen Prozeß mit einer anderen Ausgestaltung des Reduktions- und Schmelzofens.

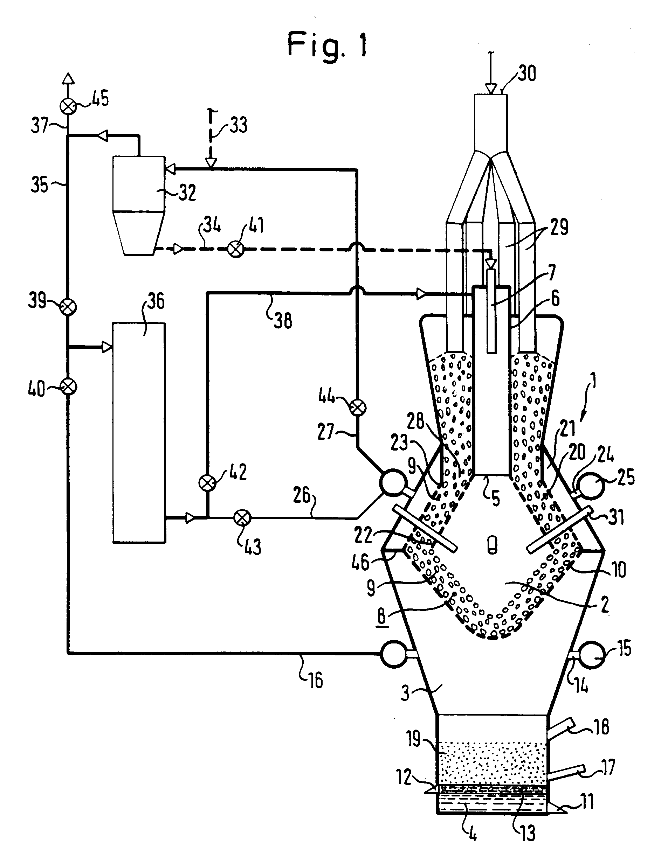

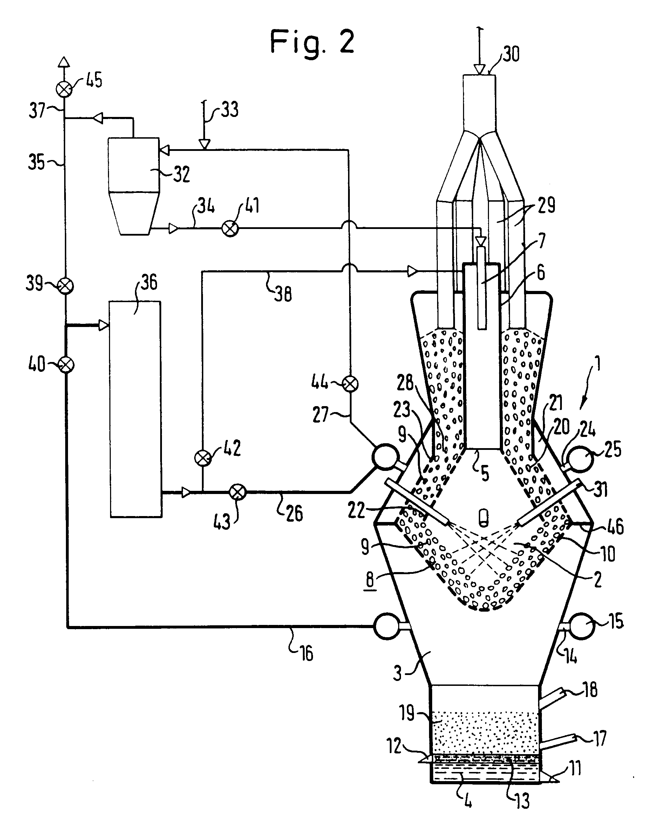

In den Prozeßdiagrammen nach den Figuren 1 und 2 weist ein Reduktions- und Schmelzofen 1 einen oberen Endreduktionsraum 2 und einen unteren Aufnahmeraum 3 für flüssiges Metall 4 auf. Der obere Endreduktionsraum 2 besitzt einen Einlaß 5 durch den feinkörnige Metalloxidpartikel und Reduktionsgas in den Endreduktionsraum 2 eingeblasen werden können. Zu diesem Zweck ist neben einem äußeren Rohr 6 ein koaxiales inneres Rohr 7 vorgesehen, das sich nur über einen Teil der Länge des äußeren Rohrs zum Einlaß 5 hin erstreckt, und es werden dem Ringraum zwischen dem äußeren Rohr 6 und dem inneren Rohr 7 das Reduktionsgas, und dem inneren Rohr 7 die feinkörnigen Metalloxidpartikel zugeführt.

Der Endreduktionsraum 2 ist von dem Aufnahmeraum 3 durch eine Trennwand 8 getrennt, die durch eine Schüttgutfilterschicht 9 aus stückiger Kohle, insbesondere Koks, und/oder Keramikteilen gebildet ist, und einen Gas- und Materialdurchlaß zwischen dem Endreduktionsraum 2 und dem Aufnahmeraum 3 darstellt. Das Material der Schüttgutfilterschicht wird durch ein flüssigkeitsgekühltes Stützgitter 10 gehalten. Dieses Gitter ist zwischen den beiden Räumen nach unten konvergierend ausgebildet. Damit kann aufgrund des Schüttwinkels des Filterschichtmaterials ohne obere Begrenzung durch ein Stützgitter eine Filterschicht 9 von nahezu gleichmäßiger Stärke im Bereich der Trennwand 8 gebildet und aufrechterhalten werden.

Der Aufnahmeraum 3 weist eine Abstichöffnung 11 für das flüssige Metall 4 sowie eine Abstichöffnung 12 für Schlacke 13 auf, die auf dem flüssigen Metall 4 schwimmt. Außerdem weist der Aufnahmeraum 3 im oberen Bereich mehrere, längs des Umfangs verteilt angeordnete Gasauslässe 14 auf, die in eine Sammelleitung 15 münden, über die mittels einer Leitung 16 Abgas aus dem Aufnahmeraum 3 abgezogen werden kann.

Im unteren Bereich, unmittelbar oberhalb des maximalen Badspiegels, mündet wenigstens eine Düse 17 zum Einblasen eines sauerstoffhaltigen Gases, ggf. vermischt mit Feinkohle. Darüber befindet sich in der Seitenwand des Aufnahmeraums eine Chargieröffnung 18 für kohlenstoffhaltiges Material, über die stückige Kohle in den Aufnahmeraum chargierbar ist, um hier oberhalb der Schlackenschicht 13 ein Kohlefließbett 19 zu bilden.

Bei dem in den Fig. 1 und 2 dargestellten Reduktions- und Schmelzofen schließt sich an die Trennwand 8 zwischen den beiden Räumen 2 und 3 nach oben eine weitere mantelförmige Trennwand 20 an, die den Endreduktionsraum 2 seitlich gegenüber einem ringförmigen Gasraum 21 abgrenzt. Die mantelförmige Trennwand 20 ist ebenso wie die untere Trennwand 8 durch eine, von einem Stützgitter 22 gehaltene Schüttgutfilterschicht 9 aus stückiger Kohle, insbesondere Koks, und/oder Keramikteilen gebildet, welche in die Schüttgutfilterschicht 9 der Trennwand 8 ohne Unterbrechung übergeht. Die mantelförmige Trennwand 20 ist nach oben konvergierend ausgebildet, so daß, falls der Schüttwinkel des Materials der Filterschicht 9 mit dem oberen Kegelwinkel der Trennwand übereinstimmt, ohne ein beim Ausführungsbeispiel vorhandenes äußeres Stützgitter 23 die gewünschte Schichtdicke der Filterschicht 9 auch im oberen Bereich aufrecht erhalten werden kann.

Der ringförmige Gasraum 21 weist längs des Umfangs verteilt mehrere Öffnungen 24 auf, die an eine Sammelleitung 25 angeschlossen sind, welche wiederum mit Gasleitungen 26 und 27 für die Einleitung bzw. Ableitung eines Gases in bzw. aus dem Ringraum 21 in Verbindung steht. Der ringförmige Gasraum 21 ist durch eine ringförmige Trennwand 46 gegenüber dem Aufnahmeraum 3 abgetrennt, wobei in dieser Trennwand nicht eingezeichnete absperrbare Gasdurchlässe vorgesehen sein können, um zwischen dem ringförmigen Gasraum 21 und dem Aufnahmeraum 3 eine Verbindung herstellen zu können. Diese steuerbaren Gasdurchlässe könnten auch durch absperrbare Bypass-Leitungen zwischen den beiden genannten Räumen realisiert werden.

Die mantelförmige Trennwand 20 enthält oben eine ringförmige Chargieröffnung 28 für das Material der Schüttgutfilterschicht 9. Das Material ist dieser Chargieröffnung durch mehrere Fallrohre 29 über eine zentrale Eintrittsöffnung 30 zuführbar. Durch die mantelförmige Trennwand 20 sind längs des Umfangs verteilt, mehrere Düsen 31 geführt, die gegen die Innenseite der unteren Trennwand 8 gerichtet sind. Die Düsen könnten auch durch die untere Trennwand hindurchgeführt sein. Durch diese Düsen kann sauerstoffhaltiges Gas und ggf. Kohle gegen die untere Filterschicht 9 geblasen werden, um hier eine Hochtemperaturflamme zu erzeugen.

Die dem Endreduktionsraum 2 über das inneres Rohr 7 zuführbaren feinkörnigen Metalloxidpartikel sind vorzugsweise vorreduziert. Zu diesem Zweck ist ein Vorreduktionszyklon 32 vorgesehen, dem mittels des über die Leitung 27 abgeführten Abgases aus dem ringförmigen Gasraum 21 - es könnte auch ein anderes Trägergas sein - feinkörnige Metalloxidpartikel, insbesondere Eisenoxidpartikel, zuführbar sind. Die Metalloxidpartikel werden ggf. zusammen mit pulverförmiger Kohle über eine, mit der Abgasleitung 27 verbundene Speiseleitung 33 zugeführt. Die vorreduzierten Metalloxidpartikel verlassen den Vorreduktionszyklon 32 durch einen unteren Auslaß der über eine Leitung 34 mit dem inneren Rohr 7 in Verbindung steht. Das Abgas des Vorreduktionszyklons 32 wird über einen oberen Gasauslaß abgezogen, der durch eine Gasleitung 35 mit einem Gasreformer 36 bzw. eine Gasleitung 37 mit einem Abgaskamin in Verbindung steht. Dem Gasreformer 36 ist über die Gasleitung 35 das Abgas des Vorreduktionszyklons 32 und über die Gasleitung 16 das Abgas des Aufnahmeraums 3 wahlweise oder gemeinsam zuführbar. Die für die Gasreformierung erforderliche Energie wird ebenfalls aus dem Abgas entweder des Vorreduktionszyklons 32 oder des Aufnahmeraums 3 gewonnen. Zu diesem Zweck wird ein Teil des Gasstroms der Leitung 35 und/oder der Leitung 16 abgezweigt, in einer Brennkammer des Reformers 36 mit Luft verbrannt und dann dem Abgaskamin zugeleitet. Diese Maßnahme ist aus Gründen der Übersichtlichkeit nicht in den Figuren dargestellt.

Das im Gasreformer reformierte Gas ist wahlweise über eine Leitung 38 in den Ringraum zwischen dem äußeren Rohr 6 und dem inneren Rohr 7 des Reduktions- und Schmelzofens 1 einleitbar, oder über die Leitung 26 in die Sammelleitung 25. Durch die beschriebene Zufuhr von vorreduzierten Metalloxidpartikeln durch das innere Rohr 7 und von im Gasreformer 36 aufbereitetem heißen Reduktionsgas 38 über den Ringraum zwischen dem inneren Rohr 7 und dem äußeren Rohr 6 wird eine, von Reduktionsgas umhüllte Materialströmung geschaffen, die gegen die Filterschicht 9 der unteren Trennwand 8 gerichtet ist, so daß es in diesem Bereich des Endreduktionsraumes 2 zu einer bevorzugten Materialansammlung kommt. Die erwähnten Leitungen für Material und Gas enthalten übliche Absperrorgane 39 bis 45. Im übrigen enthält die Anlage nicht dargestellte weitere Einrichtungen, wie Entstauber, Gaswäscher, Gebläse, Wärmetauscher etc.

Es wird nun anhand der Fig. 1 und 2 der Ablauf eines zyklischen Verfahren beschrieben, wobei Fig. 1 die Reduktionsphase und Fig. 2 die Schmelz- und Reinigungsphase darstellt. Die gerade aktiv geschalteten Leitungen sind jeweils verstärkt dargestellt.

In der Reduktionsphase wird dem Vorreduktionszyklon 32 über die Leitung 33 Feinerz vermischt mit Kohle und über die Leitung 27 Abgas aus dem Endreduktionsraum 2 zugeführt. Das Feinerz wird im Vorreduktionszyklon 32 auf ca. 850°C vorgewärmt und bis zu einem Restsauerstoffgehalt von etwa 55% vorreduziert. Anstelle des Vorreduktionszyklons 32 können mehrere Zyklone, herkömmliche zirkulierende Wirbelschichten oder andere bekannte Einrichtungen zum Vorreduzieren von Feinerz eingesetzt werden.

Das vorreduzierte Feinerz wird über das innere Rohr 7 zusammen mit frischem Reduktionsgas durch den Einlaß 5 in den Endreduktionsraum 2 geblasen. Das frische Reduktionsgas wird aus dem Gasreformer 36 über die Leitung 38 geliefert und hat eine Temperatur von etwa 950°C und eine Zusammensetzung von Co + H₂ > 90%. Obwohl aus Gründen der Reaktionsgeschwindigkeit die Gastemperatur oberhalb der Temperatur liegen sollte, bei der im Endreduktionsraum ein wesentlicher "Sticking-Effekt" auftritt, ist das Verfahren auch bei tieferen Gastemperaturen vorteilhaft anwendbar. Die auf der Filterschicht abgelagerten feinkörnigen Partikel können, verglichen zu einer Feinerzreduktion in Wirbelschichten oder Zyklonen intensiven und während einer längerer Zeitdauer den durch die Filterschicht hindurchströmenden heißen Reduktionsgas ausgesetzt werden.

Das mit dem vorreduzierten Feinerz beladene Gas trifft auf die zuvor erhitzte Filterschicht 9 der Trennwand 8, die auf dem Stützgitter 10 ruht. Während das Gas durch die Filterschicht hindurchtritt bleiben die feinkörnigen Partikel aufgrund ihrer Klebeneigung haften und können hierdurch ausreichend lange Zeit mit dem reduzierenden Gase in Berührung gehalten werden, das nicht nur durch die untere Filterschicht 9 der Trennwand 8 in den Aufnahmeraum 3 und von hier in die Sammelleitung 15 abgezogen wird, sondern auch über die obere Filterschicht 9 der mantelförmigen Trennwand 20 in den ringförmigen Gasraum 21 und von hier in die Sammelleitung 25. Das durch die Sammelleitung 15 abgezogene Gas gelangt über die Gasleitung 16 zum Reformer 36 und wird hier zu dem über die Leitung 38 zugeführten Reduktionsgas aufbereitet. Das über die Sammelleitung 25 abgezogene Gas gelangt über die Gasleitung 27 zum Vorreduktionszyklon. Dessen Abgas kann entweder zusätzlich dem Gasreformer 36 über die Gasleitung 35 zugeführt werden, oder dem Abgaskamin über die Leitung 37.

Wenn aufgrund des Zusetzens der Filterschicht 9 mit dem fertigreduzierten Feinerz der Druckverlust der aus dem Reduktions- und Schmelzofen abgezogenen Gase eine vorgegebene Grenze erreicht hat, schließt sich nach dieser Reduktionsphase die Schmelz- und Reinigungsphase an, die im Prozeßdiagramm nach Fig. 2 dargestellt ist.

In dieser Phase wird durch die Düsen 31 kaltes oder vorgewärmtes sauerstoffhaltiges Gas, vorzugsweise zusammen mit einem Brennstoff, wie Kohlestaub, gegen die Filterschicht 9 der Trennwand 8 geblasen, und hierdurch eine Hochtemperaturflamme mit einer Temperatur von 2000 bis 2500°C erzeugt, durch die die auf und in der Filterschicht zurückgehaltenen metallisierten Partikel geschmolzen werden und im flüssigen Zustand durch die Filterschicht in den Aufnahmeraum 3 hindurchtreten. Gleichzeitig wird die Filterschicht über die Liquidustemperatur des Metalls erhitzt und gereinigt. Bei dem Ausführungsbeispiel wird während dieser Phase die Zufuhr von vorreduziertem Material zum inneren Rohr 7 und das Einblasen von Reduktionsgas über die Leitung 38 unterbrochen, und stattdessen das Reduktionsgas des Gasreformers 36, dem weiterhin das Gas aus dem Aufnahmeraum 3 über die Leitung 16 zugeführt wird, nunmehr mittels der Leitung 26 in den ringförmigen Gasraum 21 geblasen. Durch Reversieren der Gasströmung durch die Filterschicht 9 der oberen mantelförmigen Trennwand 20 wird auch die Filterschicht in diesem Bereich gereinigt, d.h. an dieser anhaftendes, noch lockeres vorreduziertes Feinerz wird in den Endreduktionsraum 2 befördert, wo es beim Gasaustritt durch die Filterschicht 9 der unteren Trennwand 8 in den Aufschmelzbereich gerät.

Das Schmelzen erfolgt teils durch die Strahlung der Hochtemperaturflamme, teils durch Konvektion beim anschließenden Strömen der heißen Abgase durch die Filterschicht. Bei im Überschuß vorhandenem Kohlenstoff aus eingeblasener Kohle und Koks der Filterschicht, findet eine weitgehende Reduktion von CO₂ + H₂O zu CO + H₂ unter Temperaturerniedrigung der über die Sammelleitung 15 abgezogenen Gase statt. Da das zunächst hocherhitzte Gas der Hochtemperaturflamme, welches die Verflüssigung des Eisens auf der Filterschicht bewirkt, im Koks der Filterschicht aufgrund der Boudouard-Reaktion wieder abgekühlt wird, können Wärmeverluste niedrig gehalten und der thermische Wirkungsgrad erhöht werden.

Das Material der Filterschicht ist im Bereich der Trennwand einem Verbrauch unterworfen - Koks in der Filterschicht wird durch die Boudouard-Reaktion verbraucht, Keramikteile werden geschmolzen - so daß die Filterschicht im Bereich der Trennwand 8 entweder periodisch oder kontinuierlich ersetzt werden muß. Dies geschieht bei dem dargestellten Ausführungsbeispiel dadurch, daß die Filterschicht 9 nach oben im Bereich der mantelförmigen Trennwand 20 fortgesetzt ist und über die Fallrohre 29 kontinuierlich ergänzt wird.

Ein besonderer Vorteil des in den Fig. 1 und 2 dargestellten Reduktions- und Schmelzofens besteht darin, daß das Feuerfestmaterial des Ofens - dieses ist in den schematischen Figuren nicht dargestellt - gegenüber den, zum Aufschmelzen erforderlichen hohen Flammentemperaturen durch die Filterschicht der unteren Trennwand 8 und der mantelförmigen Trennwand 20 abgeschirmt ist. Die im Endreduktionsraum 2 in der Schmelz- und Reinigungsphase auftretende große Hitze wird durch die Filterschichten und die wassergekühlten Stützgitter 10 bzw. 22 absorbiert, wobei durch das beim Reversieren über den ringförmigen Gasraum 21 eingeblasene Reduktionsgas in der Filterschicht der oberen mantelförmigen Trennwand 20 eine weitere Kühlung bewirkt wird.

Das durch die Filterschicht 9 der Trennwand 8 in der Schmelz- und Reinigungsphase hindurchgetretene flüssige Eisen, tropft in den Aufnahmeraum 3 und wird hier als Schmelze 4 am Boden gesammelt. Zur Aufrechterhaltung einer ausreichend hohen Temperatur der Schmelze bzw. zur Erhöhung der Temperatur der Schmelze auf Abstichtemperatur, wird über die Düse 17 sauerstoffhaltiges Gas eingeblasen und oberhalb der Einblaszone ein Kohlefließbett 19 durch Zufuhr von Kohle über die Chargieröffnung 18 gebildet. Auf diese Weise entsteht zusätzliches reduzierendes Gas, das über die Sammelleitung 15 abgezogen und dem Gasreformer 36 zugeführt wird.

Nach der Schmelz- und Reinigungsphase ist die Filterschicht 9 gereinigt und erhitzt, und es schließt sich erneut die Reduktionsphase an, die anhand von Fig. 1 beschrieben worden ist. Zu diesem Zweck werden die Absperrorgane 39 bis 45 entsprechend umgesteuert.

Obwohl anhand der Fig. 1 und 2 ein zyklisches Verfahren mit Reduktionsphase und Schmelzphase beschrieben wurde, können bei geeigneter Abstimmung diese beiden Phasen auch zu einem kontinuierlichen Verfahren zusammengefaßt werden. In diesem Fall werden durch die Düsen 31 ständig oder nur mit kurzzeitigen Unterbrechungen sauerstoffhaltige Gase und Kohle eingeblasen und das auf der Filterschicht 9 der unteren Trennwand 8 anklebende Material kontinuierlich geschmolzen.

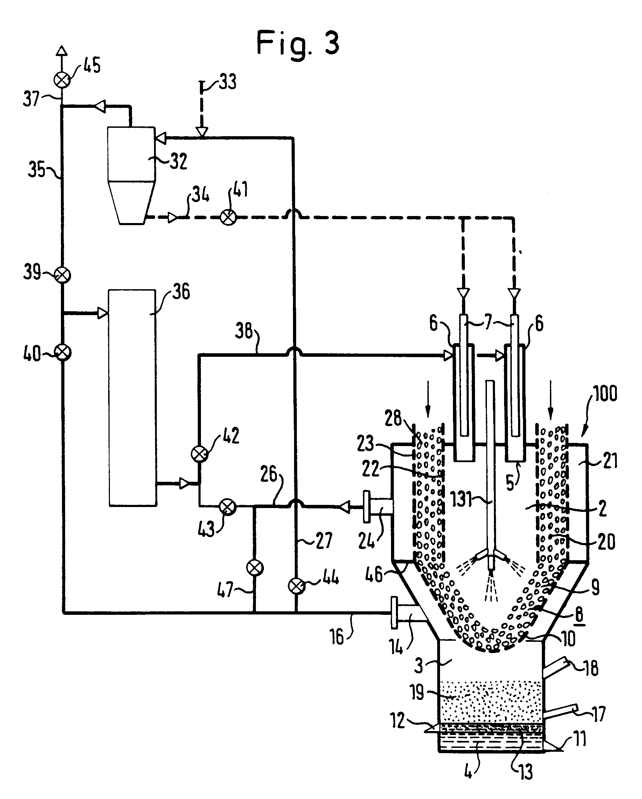

Fig. 3 stellt ebenfalls einen kontinuierlichen Prozeß mit einer abgewandelten Ausgestaltung des Reduktions- und Schmelzofens dar. Teile, die denen des ersten Ausführungsbeispiels entsprechen, sind mit den gleichen Bezugszeichen bezeichnet und werden nicht mehr gesondert erläutert.

Bei dem Reduktions- und Schmelzofen 100 nach Fig. 3 ist die obere Trennwand 20 zylindrisch ausgebildet. Das Material der Filterschicht 9 kann in ähnlicher Weise wie beim ersten Ausführungsbeispiel erläutert, der ringförmigen Chargieröffnung 28 zugeführt werden. Die Düsen 31 zum Einblasen des sauerstoffhaltigen Gases in den Endreduktionsraum 2 sind durch ein zentrales Rohr 131 ersetzt, das am unteren Ende mehrere gegen die Filterschicht 9 der Trennwand 8 gerichtete Düsenöffnungen aufweist. Ferner ist die, beim ersten Ausführungsbeispiel aus den Rohren 6 und 7 gebildete Einblaseinrichtung für vorreduziertes Feinerz und heißes Reduktionsgas mehrfach vorhanden. Die koaxialen Rohre 6 und 7 sind innerhalb der ringförmigen Chargieröffnung 28 verteilt um das zentrale Rohr 131 angeordnet.

Bei dem Ausführungsbeispiel nach Fig. 3 wird durch die Rohre 6/7 vorreduziertes Feinerz zusammen mit heißem Reduktionsgas in den Endreduktionsraum 2 geblasen. Gleichzeitig wird sauerstoffhaltiges Gas und gegebenenfalls Kohle über das zentrale Rohr 131 eingeblasen und dabei eine Hochtemperaturflamme im Bereich unmittelbar oberhalb der Filterschicht 9 der Trennwand 8 erzeugt. Die Gase verlassen den Endreduktionsraum 2 über die Filterschicht 9 der unteren und seitlichen Trennwände 8 und 20 und werden aus den Gasauslässen 14 und 24 über die Leitungen 16 und 26/47 zum Gasreformer 36 zurückgeleitet. Durch Reversieren des Gasstromes über die Leitung 26 kann die obere Filterschicht 20 gelegentlich gereinigt werden. Die auf der Filterschicht 9 anklebenden Partikel werden durch die Hochtemperaturflamme laufend geschmolzen und treten durch die untere Filterschicht hindurch in den Aufnahmeraum 3.

Der beschriebene Reduktions- und Schmelzofen eignet sich auch zum zusätzlichen Reduzieren und Schmelzen von stückigem Erz, das über die Chargieröffnung 28 vermischt mit dem Material der Filterschicht 9 zugegeben wird. In diesem Fall wird, wie beim Reversieren des zuletzt beschriebenen Prozesses, das heiße Reduktionsgas des Reformers 36 nicht nur durch die Rohre 6 sondern auch über die Leitung 26 durch den Einlaß 24 in den ringförmigen Gasraum 21 und dann durch die zylindrische Trennwand 20 in den Endreduktionsraum 2 geblasen. Das kokshaltige Material der Filterschicht 9, das sich im unteren Bereich der Filterschicht verbraucht, wird beim Absinken erhitzt und durch das heiße, dem Ringraum 21 zugeführte, Reduktionsgas reduziert. Wenn das Material aufgrund des Verbrauchs der Filterschicht aus dem Bereich der mantelförmigen Trennwand 20 in den Bereich der unteren Trennwand 8 gelangt, wird es aufgrund der hier durch die Hochtemperaturflamme erzeugten Hitze geschmolzen, und tropft zusammen mit dem reduzierten Material des Endreduktionsraums in den Aufnahmeraum 3.

Die Filterschicht wird bei den beschriebenen Ausführungsbeispielen im unteren Bereich, d.h. im Bereich der Trennwand 8, auf eine Dicke von 20 bis 50 cm eingestellt.

## Patentansprüche

1. Verfahren zum Herstellen von flüssigem Metall, insbesondere flüssigem Roheisen, aus feinkörnigen Metalloxidpartikeln, insbesondere Eisenoxidpartikel, bei dem die Metalloxidpartikel zusammen mit heißem Reduktionsgas in einen Endreduktionsraum (2) einer Endreduktionsstufe geblasen, hier fertig reduziert und dann geschmolzen werden, wobei das mit den Partikeln beladene Gas durch eine erhitzte im Endreduktionsraum (2) befindliche Schüttgutfilterschicht (9) aus stückiger Kohle, insbesondere Koks, und/oder Keramikteilen hindurchgeleitet wird, wobei ein wesentlicher Anteil der Partikel auf und in der Filterschicht (9) zurückgehalten und durch das Reduktionsgas fertig reduziert wird, und daß durch Blasen eines sauerstoffhaltigen Gases gegen die Filterschicht (9) vor dieser eine Hochtemperaturflamme erzeugt wird, durch die die auf und in der Filterschicht (9) zurückgehaltenen, metallisierten Partikel geschmolzen werden, im flüssigen Zustand durch die Filterschicht (9) in einen durch eine Trennwand (8) von dem Endreduktionsraum (2) getrennten Aufnahmeraum (3) für flüssiges Metall hindurchtreten und gleichzeitig die Filterschicht über die Liquidustemperatur des Metalls erhitzt und gereinigt wird.

2. Verfahren nach Anspruch 1, dadurch **gekennzeichnet**, daß die Metalloxidpartikel vor dem Einblasen in den Endreduktionsraum (2) in einem Vorreduktionsraum einer Vorreduktionsstufe (32) durch reduzierende, heiße Gase in einer Wirbelschicht erhitzt und vorreduziert werden.

3. Verfahren nach Anspruch 1 oder 2, dadurch **gekennzeichnet**, daß die Metalloxidpartikel in der Vorreduktionsstufe (32) bis zu einem Restsauerstoffgehalt von 40 bis 60 % reduziert werden.

4. Verfahren nach Anspruch 2 oder 3, dadurch **gekennzeichnet**, daß die Metalloxidpartikel in der Vorreduktionsstufe (32) auf 750 bis 850°C erhitzt werden.

5. Verfahren nach einem der Ansprüche 1 bis 4, dadurch **gekennzeichnet**, daß das in den Endreduktionsraum (2) eingeblasene Reduktionsgas eine Temperatur von 850 bis 950°C aufweist.

6. Verfahren nach einem der Ansprüche 1 bis 5, dadurch **gekennzeichnet**, daß im Aufnahmeraum (3) für das flüssige Metall durch oberhalb des Metallbads (bei 17) eingeblasene sauerstoffhaltige Gase und Zufuhr von Kohle ein Kohlefließbett (19) gebildet wird.

7. Verfahren nach einem der Ansprüche 1 bis 6, dadurch **gekennzeichnet**, daß die heißen Abgase des Aufnahmeraums (3) für das flüssige Metall dem Vorreduktionsraum und/oder einem Gasreformer zum Erzeugen des Reduktionsgases zugeführt werden.

8. Verfahren nach einem der Ansprüche 2 bis 7, dadurch **gekennzeichnet**, daß die Abgase des Vorreduktionsraumes einem Gasreformer (36) zum Erzeugen des Reduktionsgases zugeführt werden.

9. Verfahren nach einem der Ansprüche 1 bis 8, dadurch **gekennzeichnet**, daß der Endreduktionsraum (2) sowohl in einem oberen als auch in einem unteren Bereich durch eine Filterschicht (9) begrenzt wird und durch die Filterschicht (9) des oberen Bereiches wenigstens zeitweise Reduktionsgas in den Endreduktionsraum (2) eingeleitet und durch die Filterschicht (9) des unteren Bereiches das mit vorreduzierten Metalloxidpartikeln beladene Reduktionsgas sowie das heiße Abgas der Hochtemperaturflamme abgeleitet wird.

10. Verfahren nach einem der Ansprüche 1 bis 9, dadurch **gekennzeichnet**, daß in den Endreduktionsraum (2) periodisch abwechselnd mit vorreduzierten Metalloxidpartikeln beladenes Reduktionsgas und sauerstoffhaltiges Gas eingeblasen wird.

11. Verfahren nach einem der Ansprüche 1 bis 10, dadurch **gekennzeichnet**, daß die Schüttgutfilterschicht (9) auf oder zwischen Stützgittern (22, 23) gebildet und das aufgebrauchte Material der Filterschicht (9) durch periodische oder kontinuierliche Zufuhr von frischem Material ersetzt wird.

12. Verfahren nach Anspruch 11, dadurch **gekennzeichnet**, daß der Filterschicht (9) auch grobkörnige bzw. stückige Metalloxidpartikel zugeführt werden.

13. Reduktions- und Schmelzofen umfassend
einen oberen Endreduktionsraum (2) für die Reduktion von feinkörnigen Metalloxidpartikeln, mit Einlässen (5, bei 31) für partikelförmige Feststoffe und Gase sowie einem Gasauslaß (bei 8), und
einen unteren Aufnahmeraum (3), zur Aufnahme des aus den Metalloxidpartikeln gewonnenen flüssigen Metalls (4), mit einem Material- und einem Gaseinlaß (bei 8) für Abgas aus dem Endreduktionsraum (2) sowie mit Gasauslässen (14) und mit einer Abstichöffnung (11, 12) für flüssiges Metall (4) und von Schlacke (13),
dadurch **gekennzeichnet,**
daß die beiden Räume (2, 3) durch eine Trennwand (8) voneinander getrennt sind, die wenigstens teilweise durch eine von einem Stützgitter (10) gehaltene Schüttgutfilterschicht (9) aus stückiger Kohle, insbesondere Koks, und/oder Keramikteilen gebildet ist, und einen Gas- und Materialdurchlaß zwischen Reduktionsraum (2) und Aufnahmeraum (3) darstellt.

14. Ofen nach Anspruch 13, dadurch **gekennzeichnet,** daß die Trennwand (8) zwischen den beiden Räumen nach unten konvergierend ausgebildet ist.

15. Ofen nach Anspruch 13 oder 14, dadurch **gekennzeichnet**, daß sich an die Trennwand (8) zwischen den beiden Räumen (2, 3) nach oben eine weitere mantelförmige Trennwand (20) anschließt, die den Reduktionsraum (2) seitlich gegenüber einem ringförmigen Gasraum (21) abgrenzt,
daß die mantelförmige Trennwand (20) ebenfalls wenigstens teilweise durch eine von einem Stützgitter (22, 23) gehaltene Schüttgutfilterschicht (9) aus stückiger Kohle, insbesondere Koks, und/oder Keramikteilen gebildet ist, und
der ringförmige Gasraum (21) wenigstens eine Öffnung (24) für die Einleitung und/oder Ableitung eines Gases in oder aus dem Gasraum (21) aufweist.

16. Ofen nach einem der Ansprüche 13 bis 15, dadurch **gekennzeichnet**, daß die mantelförmige Trennwand (20) oben eine Chargieröffnung (28) für das Material (9) der Schüttgutfilterschicht enthält.

17. Ofen nach einem der Ansprüche 13 bis 16, dadurch **gekennzeichnet**, daß durch die Trennwand (8, 20) Düsen (31) geführt sind, die gegen die Innenseite der unteren Trennwand (8) gerichtet sind.

18. Ofen nach einem der Ansprüche 13 bis 17, dadurch **gekennzeichnet**, daß oberhalb des maximalen Schmelzspiegels in den Aufnahmeraum Düsen (17) zum Einblasen eines sauerstoffhaltigen Gases münden.

19. Ofen nach einem der Ansprüche 13 bis 18, dadurch **gekennzeichnet**, daß in der Seitenwand des Aufnahmeraums (3) eine Chargieröffnung (18) für kohlenstoffhaltiges Material vorgesehen ist.

20. Ofen nach einem der Ansprüche 13 bis 19, dadurch **gekennzeichnet**, daß das Stützgitter (10, 22, 23) Kanäle für eine Kühlflüssigkeit aufweist.

## Claims

1. A process for the production of liquid metal, in particular liquid pig iron, from fine-grain metal oxide particles, in particular iron oxide particles, wherein the metal oxide particles are blown together with hot reducing gas into a final reducing space (2) of a final reducing stage, there subjected to finishing reducing and then melted, whereby the gas which is loaded with the particles is passed through a heated bulk material filter layer (9) of lump coal, in particular coke, and/or ceramic pieces, the layer being located in the final reducing space (2), a substantial proportion of the particles being retained on and in the filter layer (9) and subjected to finishing reducing by the reducing gas, and that a high-temperature flame is produced in front of the filter layer (9) by an oxygen-bearing gas being blown against the filter layer (9), by means of which flame the metallised particles which are retained on and in the filter layer (9) are melted, pass in the liquid condition through the filter layer (9) into a receiving space (3) for liquid metal, the receiving space being separated by a partition wall (8) from the final reducing space (2) and at the same time the filter layer is heated above the liquidus temperature of the metal and cleaned.

2. A process as set forth in claim 1 characterised in that prior to being injected into the final reducing space (2) the metal oxide particles are heated and pre-reduced in a pre-reducing space (32) of a pre-reducing stage by reducing hot gases in a fluidised bed.

3. A process as set forth in claim 1 or claim 2 characterised in that the metal oxide particles are reduced in the pre-reducing stage (32) to a residual oxygen content of between 40 and 60%.

4. A process as set forth in claim 2 or claim 3 characterised in that the metal oxide particles are heated in the pre-reducing stage (32) to between 750 and 850° C.

5. A process as set forth in one of claims 1 through 4 characterised in that the reducing gas which is injected into the final reducing space (2) is at a temperature of between 850 and 950° C.

6. A process as set forth in one of claims 1 through 5 characterised in that a fluid bed of coal (19) is formed in the receiving space (3) for the liquid metal by oxygen-bearing gases which are injected above the metal bath (at 17), and a feed of coal.

7. A process as set forth in one of claims 1 through 6 characterised in that the hot waste gases from the receiving space (3) for the liquid metal are fed to the pre-reducing space and/or a gas reformer for producing the reducing gas.

8. A process as set forth in one of claims 2 through 7 characterised in that the waste gases of the pre-reducing space are fed to a gas reformer (36) for producing the reducing gas.

9. A process as set forth in one of claims 1 through 8 characterised in that the final reducing space (2) is delimited by a filter layer (9) both in an upper and in a lower region and reducing gas is introduced into the final reducing space (2) at least from time to time through the filter layer (9) in the upper region and the reducing gas which is loaded with pre-reduced metal oxide particles as well as the hot waste gases from the high-temperature flame are carried off through the filter layer of the lower region.

10. A process as set forth in one of claims 1 through 9 characterised in that reducing gas loaded with pre-reduced metal oxide particles and oxygen-bearing gas are periodically alternately injected into the final reducing space (2).

11. A process as set forth in one of claims 1 through 10 characterised in that the bulk material filter layer (9) is formed on or between support grids (22, 23) and the consumed material of the filter layer (9) is replaced by a periodic or continuous feed of fresh material.

12. A process as set forth in claim 11 characterised in that coarse-grain or lump metal oxide particles are also fed to the filter layer (9).

13. A reducing and smelting furnace comprising:
an upper final reducing space (2) for the reduction of fine-grain metal oxide particles, having inlets (5, at 31) for solid materials in particle form and gases, and a gas outlet (at 8), and
a lower receiving space (3) for receiving the liquid metal (4) produced from the metal oxide particles, having a material and a gas inlet (at 8) for waste gas from the final reducing space (2) and gas outlets (14) and a tap opening (11, 12) for liquid metal (4) and slag (13),
characterised in that
the two spaces (2, 3) are separated form each other by a partition wall (8) which is at least partially formed by a bulk material filter layer (9) which is held by a support grid (10) and comprises lump coal, in particular coke, and/or ceramic pieces, and represents a gas and material passage between the reducing space (2) and the receiving space (3).

14. A furnace as set forth in claim 13 characterised in that the partition wall (8) between the two spaces is of a configuration which converges downwardly.

15. A furnace as set forth in claim 13 or claim 14 characterised in that a further curved partition wall (20) adjoins in an upward direction the partition wall (8) between the two spaces (2, 3), and laterally delimits the reducing space (2) relative to an annular gas space (21),
the partition wall (20) is also at least partially formed by a bulk material filter layer (9) which is held by a support grid (22, 23) and comprises lump coal, in particular coke, and/or ceramic pieces, and
the annular gas space (21) has at least one opening (24) for the introduction and/or discharge of a gas into or out of the gas space (21).

16. A furnace as set forth in one of claims 13 through 15 characterised in that the partition wall (20) includes at its top a charging opening (28) for the material (9) of the bulk material filter layer.

17. A furnace as set forth in one of claims 13 through 16 characterised in that passing through the partition wall (8, 20) are nozzles (31) which are directed towards the inside of the lower partition wall (8).

18. A furnace as set forth in one of claims 13 through 17 characterised in that nozzles (17) for injection of an oxygen-bearing gas open into the receiving space above the maximum level of the surface of the molten bath.

19. A furnace as set forth in one of claims 13 through 18 characterised in that a charging opening (18) for carbonaceous material is provided in the side wall of the receiving space (3).

20. A furnace as set forth in one of claims 13 through 19 characterised in that the support grid (10, 22, 23) has ducts for a cooling fluid.

## Revendications

1. Procédé de production de métal liquide, notamment de fonte brute liquide, à partir de particules d'oxyde métallique à grain fin, notamment de particules d'oxyde de fer, dans lequel les particules d'oxyde métallique avec un gaz de réduction chaud sont soufflées dans une chambre de réduction finale (2) d'une étape de réduction finale, y sont complètement réduites et ensuite fondues, étant entendu que le gaz chargé des particules est acheminé à travers une couche filtrante de matière en vrac (9) chauffée, se trouvant dans la chambre de réduction finale (2) et composée de charbon gailleteux, notamment de coke, et/ou de parties céramiques, une proportion sensible des particules étant retenue sur et dans la couche filtrante (9) et étant complètement réduite par le gaz de réduction, et que le soufflage d'un gaz oxygéné contre la couche filtrante (9) produit devant cette dernière une flamme haute température grâce à laquelle les particules métallisées retenues sur et dans la couche filtrante (9) sont fondues, traversent à l'état liquide la couche filtrante (9) en pénétrant dans une chambre de recueil (3) de métal liquide séparée par une cloison (8) de la chambre de réduction finale (2) et la couche filtrante est simultanément chauffée au-delà de la température de liquidus du métal et nettoyée.

2. Procédé selon la revendication 1, caractérisé en ce que les particules d'oxyde métallique, avant l'insufflation dans la chambre de réduction finale (2), sont chauffées et préréduites dans une chambre de préréduction d'une étape de préréduction (32) par des gaz réducteurs chauds en une couche turbulente.

3. Procédé selon la revendication 1 ou 2, caractérisé en ce que les particules d'oxyde métallique sont réduites à une teneur résiduelle en oxygène de 40 à 60 % au cours de l'étape de préréduction (32).

4. Procédé selon la revendication 2 ou 3, caractérisé en ce que les particules d'oxyde métallique sont chauffées à 750 à 850°C au cours de l'étape de préréduction (32).

5. Procédé selon une des revendications 1 à 4, caractérisé en ce que le gaz réducteur insufflé dans la chambre de réduction finale (2) a une température de 850 à 950°C.

6. Procédé selon une des revendications 1 à 5, caractérisé en ce que se forme dans la chambre de recueil (3) de métal liquide un lit fluidisé de charbon (19) par les gaz oxygénés insufflés au-dessus du bain de métal (en 17) et l'apport de charbon.

7. Procédé selon une des revendications 1 à 6, caractérisé en ce que les gaz d'échappement chauds de la chambre de recueil (3) de métal liquide sont acheminés à la chambre de préréduction et/ou à un reformeur de gaz en vue de la production du gaz réducteur.

8. Procédé selon une des revendications 2 à 7, caractérisé en ce que les gaz d'échappement de la chambre de préréduction sont acheminés à un reformeur de gaz (36) en vue de la production du gaz réducteur.

9. Procédé selon une des revendications 1 à 8, caractérisé en ce que la chambre de réduction finale (2) est limitée tant dans sa zone supérieure que dans sa zone inférieure par une couche filtrante (9) et que du gaz réducteur est envoyé au moins par intermittence à travers la couche filtrante (9) de la zone supérieure dans la chambre de réduction finale (2) et que le gaz réducteur chargé des particules d'oxyde métallique préréduites ainsi que le gaz d'échappement chaud de la flamme haute température sont évacués à travers la couche filtrante (9) de la zone inférieure.

10. Procédé selon une des revendications 1 à 9, caractérisé en ce qu'on insuffle dans la chambre de réduction finale (2), périodiquement et en alternance, du gaz réducteur chargé de particules d'oxyde métallique préréduites et du gaz oxygéné.

11. Procédé selon une des revendications 1 à 10, caractérisé en ce que la couche filtrante de matière en vrac (9) est formée sur ou entre des grilles d'appui (22, 23) et que le matériau consommé de la couche filtrante (9) est remplacé par apport périodique ou continu de matériau frais.

12. Procédé selon la revendication 11, caractérisé en ce qu'on achemine également des particules d'oxyde métallique à gros grain ou en morceaux à la couche filtrante (9).

13. Four de réduction et de fusion, comprenant
une chambre supérieure de réduction finale (2) destinée à la réduction de particules d'oxyde métallique à grain fin, avec des admissions (5, en 31) pour solides particulaires et gaz ainsi qu'un échappement de gaz (en 8) et
une chambre inférieure de recueil (3) destinée à recueillir le métal liquide (4) obtenu à partir des particules d'oxyde métallique, avec une admission de matériau et de gaz (en 8) pour le gaz d'échappement de la chambre de réduction finale (2) ainsi que des sorties de gaz (14) et un trou de coulée (11, 12) pour le métal liquide (4) et le laitier (13),
caractérisé en ce que
les deux chambres (2, 3) sont séparées par une cloison (8) qui est formée au moins partiellement par une couche filtrante de matière en vrac (9) retenue par une grille d'appui (10) et composée de charbon gailleteux, notamment de coke, et/ou de parties céramiques et constitue un passage pour gaz et matériau entre la chambre de réduction (2) et la chambre de recueil (3).

14. Four selon la revendication 13, caractérisé en ce que la cloison a une forme convergente vers le bas entre les deux chambres.

15. Four selon la revendication 13 ou 14, caractérisé en ce qu'à la cloison (8) entre les deux chambres (2, 3) fait suite vers le haut une autre cloison (20) qui délimite la chambre de réduction (2) latéralement par rapport à une chambre de gaz annulaire (21),
que la cloison enveloppe (20) est formée également au moins partiellement par une couche filtrante de matière en vrac (9) retenue par une grille d'appui (22, 23) et composée de charbon gailleteux, notamment de coke, et/ou de parties céramiques, et
que la chambre de gaz annulaire (21) présente au moins un orifice (24) pour l'admission et/ou l'évacuation d'un gaz dans ou hors de la chambre de gaz (21).

16. Four selon une des revendications 13 à 15, caractérisé en ce que la cloison enveloppe (20) contient dans sa partie supérieure un orifice de chargement (28) destiné au matériau (9) de la couche filtrante de matière en vrac.

17. Four selon une des revendications 13 à 16, caractérisé en ce que la cloison (8, 20) est traversée par des buses (31) qui sont dirigées contre la face interne de la cloison inférieure (8).

18. Four selon l'une des revendications 13 à 17, caractérisé en ce que des buses (17) pour insufflation d'un gaz oxygéné débouchent au-dessus du niveau maximal de masse fondue.

19. Four selon une des revendications 13 à 18, caractérisé en ce qu'un orifice de chargement (18) pour matériau carboné est prévu dans la paroi latérale de la chambre de recueil (3).

20. Four selon une des revendications 13 à 19, caractérisé en ce que la grille d'appui (10, 22, 23) présente des canaux destinés à un liquide de refroidissement.
